# EUROPÄISCHE PATENTSCHRIFT

(11) **EP 3 247 530 B1**
(45) Veröffentlichungstag und Bekanntmachung des Hinweises auf die Patenterteilung: **06.03.2019**
(21) Anmeldenummer: 16701283.0
(22) Anmeldetag: 21.01.2016
(51) Int. Cl.: B23K 1/002, B23K 1/19, B23K 1/20, B23K 103/00, B23K 35/30, B23K 35/02, C22C 9/00, C22C 30/02, C22C 30/06, B23K 103/04, B23K 103/16, C22C 30/04

(54) **HARTLOTLEGIERUNG**
ALLOY FOR HARD SOLDERING
ALLIAGE POUR SOUDURE ÉPAISSE

(30) Priorität: 22.01.2015 DE 102015100937
(43) Veröffentlichungstag der Anmeldung: 29.11.2017
(73) Patentinhaber: SAXONIA Technical Materials GmbH, 63457 Hanau (DE)
(72) Erfinder: WIEHL, Gunther, 63741 Aschaffenburg (DE); THIEROLF-DOEPP, Steven, 63486 Bruchköbel (DE); FALLHEIER, Inge, 63589 Linsengericht (DE); SCHIMPFERMANN, Max, 63526 Erlensee (DE); SCHNEE, Daniel, 63505 Langenselbold (DE)
(74) Vertreter: Pfenning, Meinig & Partner mbB
(86) Internationale Anmeldenummer: PCT/EP2016/051187
(87) Internationale Veröffentlichungsnummer: WO 2016/116536

(56) Entgegenhaltungen:
- WO-A1-2013/175290
- CN-A- 103 056 551
- DE-U1-202013 007 623

## Beschreibung

Hartlöten ist ein wichtiges Verfahren zum Verbinden von Bauteilen in der Serienfertigung und der Prototypenherstellung. Es ist ein ökonomisches Verfahren zum Verbinden metallischer Bauteile mit einem Metalladditiv, dem Hartlot, welches die Bauteile nur geringen mechanischen Spannungen aussetzt. Optional werden oft Flussmittel und/oder Inertgase eingesetzt. Die Schmelztemperatur des Hartlots ist niedriger als die Schmelztemperatur der zu lötenden Metallteile. Beide werden von dem geschmolzenen Lot benetzt ohne selbst zu schmelzen. Gebräuchliche Hartlotlegierungen für den Schmelzbereich von 600-800°C sind oft Ag-Cu-Zn - Lote und werden beschrieben in Normen wie z.B. DIN EN ISO 17672 und AWS A5.8M/A5.8-2011 (Brazing Filler Metals) und US-A-2019984.
Solche Legierungen können für zahlreiche Anwendungen verwendet werden, aber erfüllen nicht immer alle Anforderungen hinsichtlich ihrer Korrosionsneigung und wegen eines Schmelzbereichs, der bei einem definierten Silbergehalt möglichst niedrig sein soll. Modifizierte Ag-Cu-Zn Lotlegierungen mit einem oft höheren Silbergehalt enthalten außerdem Nickel (Ni) und Mangan (Mn) und sind bekannt aus DE 19725956. Solche Lotlegierungen werden oft in der Werkzeugindustrie genutzt. Nickel kann zur Verstärkung der Lötverbindungen zugefügt werden und um die Benetzung auf Werkzeugstählen zu verbessern. Dies erhöht jedoch den Schmelzbereich der Legierungen.
EP-A-1078711 zeigt Ag-Cu-Zn Lotlegierungen, die geringe Mengen Gallium, Indium, Zinn oder Mangan enthalten. Diesen Legierungen fehlen oft gute mechanische Eigenschaften wie Duktilität und Verformbarkeit und zeigen erhöhte Schmelztemperaturen bei niedrigen Silbergehalten und somit die gleichen Nachteile wie Materialien mit höheren Silbergehalten.
CN-A-102909489 zeigt Hartlote, die zum Löten bei oberhalb 850°C geeignet sind, nicht jedoch bei niedrigeren Temperaturen von beispielsweise 720°C oder 730°C.

Aus WO 2013/175290 A1 ist eine zum Hartlöten geeignete Legierung bekannt.

Die Aufgabe war die Bereitstellung neuer Lotlegierungen, die leicht herzustellen sind, trotz deutlich abgesenktem Silbergehalt gegenüber Ag449 bei maximalen Löttemperaturen von etwa 710°C bis 730°C verarbeitet werden können, um beim Verlöten von Hartmetallen und Cermets mit Stahllegierungen deren Materialeigenschaften nicht zu beeinträchtigen, da hierdurch die AC1-Temperatur von 723°C aus dem Eisen-Kohlenstoff-Phasendiagramm überschritten wird, was zur Bildung von Austenit und im Anschluss beim Abkühlen zu harten, spröden Phasen führt, die zu einer unerwünschten Aufhärtung und Versprödung führen. Außerdem soll die Lotlegierung bei diesen Löttemperaturen hohe Scherfestigkeiten von mindestens 250 MPa am gelöteten Werkstück aufzuweisen, die vergleichbar sind mit den Scherfestigkeiten, welche mit dem Standardlot AG449 nach DIN EN ISO 17672 erreicht werden können.

Weiter müssen die Lotlegierungen gute Kaltverformbarkeit bei Raumtemperatur besitzen (z.B. für Kaltwalzen oder Drahtziehen oder Drahtwalzen) und eine ausreichende Duktilität für Lötverbindungen besitzt, und kein Cadmium enthalten, um ökologisch unbedenklich zu sein.

Es ist bekannt, dass der Silbergehalt von Ag-Cu-X -Legierungen eine wichtige Rolle spielt für die Liquidustemperatur der Legierung durch das eutektisch Verhalten des Ag-Cu-Systems. Niedrig schmelzend bei einem bestimmten Silbergehalt bedeutet, dass ein bestimmter Silbergehalt von z.B. 28% signifikant höhere Schmelztemperaturen besitzt als eine Legierung mit 49% Silber, wenn keine zusätzlichen Schmelzpunktabsenkenden Elemente zugegeben werden. Dabei müssen die schmelzpunktabsenkenden Elemente in geschickter Art und Weise kombiniert und mit schmelzpunktsteigernden Elementen abgestimmt werden, so dass die Kaltumformbarkeit sowie die Festigkeit der Fügeverbindung nicht negativ beeinflusst werden.
Die Aufgabe wird gelöst durch die Lotlegierung gemäß der Patentansprüche.

Die Ausführungsformen in den Ansprüchen 1 bis 4 sind frei von Silizium, Alkali- und Erdalkalimetallen, Phosphor und Cadmium, mit Ausnahme unvermeidbarer Verunreinigungen.
Optional können die obigen Ausgestaltungen 0 bis 1,5 Gew.-%, insbesondere 0,1 bis 1,5 Gew.-% Zinn und/oder Gallium enthalten. Diese können zur Kontrolle des Schmelzpunktes, insbesondere dessen Absenkung zugefügt werden, allerdings bei zu hohen Gehalten zu einer Versprödung führen

Optional können die obigen Ausgestaltungen außerdem 0 bis 1 Gew.-%, insbesondere 0,1 bis 1 Gew.-% Cobalt enthalten, gegebenenfalls gemeinsam mit dem oben erwähnten Zusatz von Zinn, Gallium oder deren Kombinationen. Cobalt kann in geringen Mengen zur Kontrolle des Schmelzpunktes zugesetzt werden, führt aber bei zu hohem Zusatz zu einem starken Ansteigen der Liquidustemperatur, so dass eine vorsichtige Dosierung angebracht ist.
Optional können die obigen Ausgestaltungen 0 bis 0,5 Gew.-%, insbesondere 0,1 bis 0,5 Gew.-% Germanium enthalten, gegebenenfalls gemeinsam mit dem oben erwähnten Zusatz von Zinn, Gallium, Cobalt oder deren Kombinationen. Ähnlich Zinn und Gallium kann Germanium zur Feineinstellung des Schmelzpunktes zugesetzt werden, führt aber ebenso zur Versprödung bei Zugabe von zu großen Mengen.

Cadmium ist wegen seiner hohen Toxizität zu vermeiden, Silizium führt durch Bildung intermetallischer Phasen zu einer reduzierten Festigkeit und Alkali- und Erdalkalimetalle (also Lithium, Natrium, Kalium, Rubidium, Cäsium, Francium, Beryllium, Magnesium, Calcium, Strontium, Barium und Radium) sind zu oxidationsempfindlich. Phosphor (P) darf wegen der Bildung spröder intermetallischer Phasen in Lotverbindungen mit Eisen oder eisenhaltigen Legierungen nicht verwendet werden.
Silizium, Alkali- und Erdalkalimetalle, Phosphor und Cadmium dürfen lediglich in Mengen unvermeidbarer Verunreinigungen vorhanden sein, ebenso wie bestimmte weitere Metalle. Der Gehalt der unvermeidbaren Verunreinigungen zusammen darf nicht höher als 0,5 Gew.-%, bevorzugt 0,3 Gew.-% sein.
Aluminium kann als Verunreinigung in Mengen von bis zu 0,001 Gew.-% vorhanden sein. Phosphor, Magnesium oder Calcium, ebenso wie die anderen, oben aufgeführten Alkali- und Erdalkalimetalle, können als Verunreinigung in Mengen von bis zu jeweils 0,008 Gew.-% vorhanden sein. Cadmium, Selen, Tellur, Antimon, Wismut und Arsen können als Verunreinigung in Mengen von bis zu je 0,01 Gew.-% vorhanden sein. Blei als Verunreinigung in Mengen von bis zu 0,025 Gew.-% vorhanden sein. Schwefel kann als Verunreinigung in Mengen von bis zu 0,03 Gew.-% vorhanden sein. Auch Silizium kann als Verunreinigung in Mengen von bis zu 0,05 Gew.-% vorhanden sein, Eisen in Mengen von bis zu 0,15 Gew.-%. Verunreinigungen können in Mengen von bis zu 0,5 Gew.-% oder 0,3 Gew.-% oder 0,15 Gew.-% insgesamt vorhanden sein. Frei von Cadmium und Phosphor bedeutet als ein Cadmiumgehalt von von bis zu je 0,01 Gew.-% und Phosphorgehalt von bis zu 0,008 Gew.-%.
Um Missverständnisse auszuschließen wird darauf hingewiesen, dass die Lotlegierung der Erfindung Kupfer enthalten muss. Der Kupfergehalt liegt normalerweise bei 20 bis 53,5 Gew.-%.

Weiter Ausführungsformen betreffen die folgenden Lotlegierung, welche frei ist von Silizium, Alkali- und Erdalkalimetallen, Phosphor und Cadmium, mit Ausnahme unvermeidbarer Verunreinigungen.

In einer spezifischen Ausgestaltung enthält die Lotlegierung daher 25 bis 33 Gew.-%, 26 bis 30 Gew.-% oder 27 bis 29 Gew.-% Silber; 15 bis 25 Gew.-%, 17 bis 23 Gew.-% oder 18 bis 22 Gew.-% Zink; 6 bis 14 Gew.-%, 8 bis 12 Gew.-% oder 9 Gew.-% bis 11 Gew.-% Mangan;
0,25 bis 4 Gew.-% Nickel, 0,25 bis 2 Gew.-% oder 0,5 bis 1,5 Gew.-% Nickel;
0,5 bis 4 Gew.-% Indium, 1 bis 3 Gew.-% oder 1,5 bis 2,5 Gew.-% Indium;
20 bis 53,25 Gew.-%, 30 bis 47,75 Gew.-% oder 34 bis 44 Gew.-% Kupfer;
0 bis 1,5 Gew.-% Zinn, Gallium oder deren Kombinationen,
0 bis 1 Gew.-% Cobalt,
0 bis 0,5 Gew.-% Germanium
und unvermeidbare Verunreinigungen, wobei sich die Mengen der Bestandteile zu insgesamt 100 Gew.-% ergänzen; oder in einer weiteren Ausgestaltung

25 bis 33 Gew.-% Silber, 15 bis 25 Gew.-% Zink, 6 Gew.-% bis 14 Gew.-% Mangan, 0,25 Gew.-% bis 4 Gew.-% Nickel, 0,5 Gew.-% bis 4 Gew.-% Indium, 20 bis 53,25 Gew.-% Kupfer, 0 bis 1,5 Gew.-% Zinn, Gallium oder deren Kombinationen, 0 bis 1 Gew.-% Cobalt, 0 bis 0,5 Gew.-% Germanium
und unvermeidbare Verunreinigungen, wobei sich die Mengen der Bestandteile zu insgesamt 100 Gew.-% ergänzen; oder in einer weiteren Ausgestaltung

26 bis 30 Gew.-% Silber, 17 bis 23 Gew.-% Zink, 8 bis 12 Gew.-% Mangan, 0,25 bis 2 Gew.-% Nickel, 1 bis 3 Gew.-% Indium, 30 bis 47,75 Gew.-% Kupfer, 0 bis 1,5 Gew.-% Zinn, Gallium oder deren Kombinationen, 0 bis 1 Gew.-% Cobalt, 0 bis 0,5 Gew.-% Germanium und unvermeidbare Verunreinigungen, wobei sich die Mengen der Bestandteile zu insgesamt 100 Gew.-% ergänzen; oder in einer weiteren Ausgestaltung

27 bis 29 Gew.-% Silber, 18 bis 22 Gew.-% Zink, 9 bis 11 Gew.-% Mangan, 0,5 bis 1,5 Gew.-% Nickel, 1,5 bis 2,5 Gew.-% Indium, 34 bis 44 Gew.-% Kupfer, 0 bis 1,5 Gew.-% Zinn, Gallium oder deren Kombinationen, 0 bis 1 Gew.-% Cobalt, 0 bis 0,5 Gew.-% Germanium und unvermeidbare Verunreinigungen und wobei sich die Mengen der Bestandteile zu insgesamt 100 Gew.-% ergänzen.

Ein geeignetes Beispiel einer Legierung besteht aus 39 Gew.-% Kupfer, 28 Gew.-% Silber, 20 Gew.-% Zink, 10 Gew.-% Mangan, 2 Gew.-% Indium und 1 Gew.-% Nickel.

Die Lotlegierung kann erhalten werden durch mechanisches Legieren oder Flüssigphasenlegieren. Ein üblicher Weg ist Schmelzen. Die Lotlegierung der Erfindung kann einfach durch gemeinsames Schmelzen der entsprechenden Mengen der Legierungsbestandteile erhalten werden. Es ist auch möglich Legierungen als Ausgangsprodukte zu verwenden, also z.B. eine Legierung bestehend aus Silber, Kupfer und Zink mit den entsprechenden Mengen an Mangan und Indium oder einer Legierung daraus zu ergänzen und diese Kombination zu schmelzen.
Das Schmelzen kann in Inertgas erfolgen, wie Argon oder Stickstoff, oder auch in Luft. Gas, elektrische und Induktionsöfen sind, unter Anderem, geeignete Vorrichtungen für diesen Zweck.

Die geschmolzene Legierung kann in eine Form gegossen, verdüst oder granuliert werden, um so Pulver oder Granulate zu erhalten. Das verdüste Pulver kann z.B. für Lotpasten verwendet werden. Sowohl diese Pulver als auch Granulate können zum Pressen und Extrudieren verwendet werden, wie weiter unten beschrieben. Auf diese Weise können auch Pulver und Granulate zur Herstellung von Stanzteilen, Drähten oder Stangen verwendet werden. Das Schmelzen können somit Produktionsmethoden wie Barrenguss, Stranggießen, Schmelzspinnen, Legierungsgranulation oder Verdüsung nachfolgen. Barren und Bolzen können auch zum Strangpressen bzw. Extrudieren der Lotlegierung benutzt werden und diese so in Gestalt eines Drahtes oder Bandes gebracht werden. Die Legierung kann als Massivlot produziert und eingesetzt werden, also in Gestalt von beispielsweise Stab, Draht, Drahtring, Folie, Blech oder aus Folie oder Blech gefertigten Stanzteilen. Vorteilhafte Dicken für derart verwendete Folien oder Bleche liegen bei 0,1 bis 0,5 mm, Drähte sowie Stäbe können im Allgemeinen Durchmesser zwischen 0,5 und 2,5mm typischerweise haben.

Die Geometrie solcher Halbfabrikate kann nach Kundenanforderung angepasst werden durch Pressen, Schmieden, Drahtziehen, Heiß- oder Kaltwalzen, Drahtwalzen, Glätten, Schneiden, Stanzen oder deren Kombinationen.
Strangguss ist eine weitere Option zur Herstellung von Drähten, Bändern oder Stangen. Außerdem ist es möglich, die Lotlegierung durch Walzen von Blechen, Herstellung von geformten Gegenständen wie Ringen oder Stanzen von Stanzteilen in die gewünschte Form zu bringen.

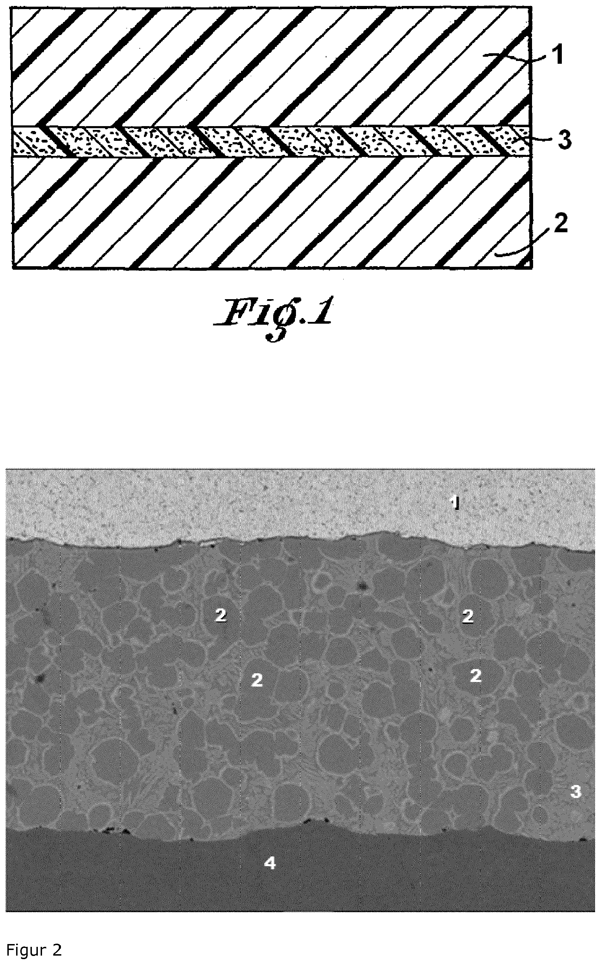

Die Lotlegierung kann auch für Schichtlote verwendet werden, was ein- oder beidseitig mit einer Lotlegierung beschichtetes Metallband ist. Dies ist im Prinzip bekannt. Es ist ebenso bekannt wie diese Schichtlote hergestellt werden können, im Allgemeinen durch Walzplattieren, Verbundguss, was im Wesentlichen das Aufbringen geschmolzener Lotlegierung auf das Metallband mit anschließendem Erstarren ist, oder auch durch Walzenauftrag einer Lotpaste oder Lotsuspension auf das Metallband und anschließende Wärmebehandlung zur Verdampfung und Ausbrennen von Lösemitteln und organischen Bestandteilen mit anschließendem Schmelzen oder Sintern des Lotpulvers. In Figur 1 ist die Struktur eines solchen Schichtlotes schematisch aufgeführt. Ein Metallband 3 trägt eine erste Lotlegierung 1 und eine zweite Lotlegierung 2 je auf einer Seite des Metallbands 3. Sowohl die erste als auch die zweite Lotlegierung können Lotlegierungen gemäß der vorlie-genden Erfindung sein. Die erste Lotlegierung 1 und die zweite Lotlegie-rung 2 können gleich oder verschieden sein. Es kann auch sein, dass eine der Lotlegierungen ein Material nach dem Stand der Technik ist, solange zumindest eine der beiden Lotlegierungen eine Lotlegierung nach der vorliegenden Erfindung ist.
Das Metallband kann aus jedem geeigneten Metall bestehen, wie Eisen, Stahl, Kupfer, Nickel und deren Legierungen, aber auch andere Metalle und Legierungen können geeignet sein. Die Reinheit kann >99%, insbesondere >99,2% sein. Das Metallband kann die Gestalt eines Bleches haben, aber auch ein Netz bzw. gewebtes Netz oder Nonwoven aus Metall, insbesondere Kupfer oder Nickel sein. Vorteilhaft ist ein Kupferband, Cu oder ein Band aus einer Kupferlegierung, beispielsweise einer Kupferlegierung, die 0,1 bis 10 Gew.-% Nickel, 0,1 bis 10 Gew.-% Silizium und Rest Kupfer enthält, oder einer Kupferlegierung, die 0,1 bis 10 Gew.-% Nickel, 0,1 bis 10 Gew.-% Eisen, gegebenenfalls bis zu 2 Gew.-% Mangan und Rest Kupfer enthält, oder eine Kupferlegierung die 1 bis 15 Gew.-% Zinn und 1 bis 30 Gew.-% Nickel enthält, oder einer Kupferlegierung, die 2 bis 15 Gew.-% Mangan und 0,1 bis 8 Gew.-% Silizium enthält, oder einer Kupferlegierung, die 15 bis 25 Gew.-% Mangan und 15 bis 25 Gew.-% Nickel enthält, wobei sich die Bestandteile dieser Legierungen stets zu 100 Gew.-% ergänzen.

Die Dicke des Metallbandes kann im Verhältnis der Dicke des Metallbandes zu der Dicke einer einzelnen Lotschicht beschrieben werden. Typische Verhältnisse sind 4:1, 1:1, 2:1, 1:0,85, 1:0,28. Gesamtdicken eines Schichtlotes betragen je nach technischen Anforderungen der jeweiligen Anwendung 0,1 mm bis 1,5 mm oder 0,2 mm bis 1,2 mm.

Die Lotlegierung ist besonders geeignet zum Hartlöten von Hartmetallen und Cermets. Hartmetalle bestehen üblicherweise aus einem Hartstoff wie Wolframcarbid, WC, oft in Pulver- oder Granulatform, der mit einem Bindermetall wie Eisen, Nickel, Kobalt oder deren Legierungen infiltriert wurde.
In derartigen Anwendungen werden üblicherweise Stahl, Hartmetall, Diamant, Diamantsegmente oder polykristalline Diamanten mit dem Hartmetall verbunden. Als Diamantsegment bezeichnet man eine Mischung aus Diamant und metallischen Bindern, wie Bronze oder Cobaltlegierungen.
Solche hartgelöteten Teile können genutzt werden, um Sägeblätter, Mahlwerkzeuge, Bohrer oder medizinische Instrumente herzustellen. Die Lotlegierung ist ebenfalls geeignet zum Verlöten von Stahl gegen Stahl.
Die Hartmetalle können insbesondere auf Trägermaterialien aufgelötet werden, welche z.B. aus Stahl, rostfreiem Stahl bestehen. Geeignete Hartmetalle sind u.A. in der Norm DIN ISO 513 beschrieben und beispielsweise H10, K5, K10, P25.
Geeignete Stähle sind u.A. in der Norm DIN EN 10027-2 beschrieben und beispielsweise 1.6582, 1.2003, 1.2235, 1.8159.

Im Allgemeinen können für die Lotlegierungen der Erfindung bekannte Flussmittel eingesetzt werden in der Form von Pasten, Lacken, Pulvern, Beschichtungen der Lotlegierung, die hierzu z.B. in Form von Stangen, Stäben, Bändern oder Drähten vorliegen kann. Geeignete Flussmittel sind beispielsweise FH10, FH11, FH12, FH20, FH21 die beschrieben sind in der Norm DIN EN 1045.
Daher betrifft die Erfindung auch geformte Gegenstände aus einer der Lotlegierungen der Erfindung in Kombination mit Flussmitteln.

Die Lotlegierungen können insbesondere in Form von Drähten, Drahtringen oder Stangen vorliegen und mit einem Flussmittel beschichtet sein. Insbesondere können Stangen oder Drähte aus der Lotlegierung der Erfindung beschichtet sein mit einem Flussmittel ausgewählt aus FH10, FH11, FH12, FH20, FH21 beschrieben in Norm DIN EN 1045.

Das Hartlöten mit den Lotlegierungen der Erfindung kann ausgeführt werden wie in dem folgenden Verfahren zum Verbinden von Metallteilen durch Löten mit den Schritten
- Bereitstellen eines Grundmaterials;
- Bereitstellen eines Teils, welches mit dem Grundmaterial zu verbinden ist;
- Anordnen von Grundmaterial und Teil in Kontakt zueinander in einer zum Löten geeigneten Weise;
- Anordnen einer Lotlegierung gemäß der Erfindung oder dessen Kombination mit einem Flussmittel in Kontakt mit dem Grundmaterial, dem Teil oder beiden in einer Weise, die zum Löten geeignet ist;
- Wärmebehandlung der so erhaltenen Anordnung bei einer ausreichenden Temperatur um die Hartlötung zu bewirken und so ein verbundenes Teil zu erhalten;
- Abkühlen des verbundenen Teils.

Hierbei besteht insbesondere das Teil aus einem Hartmetall oder einem Stahl. Das Grundmaterial kann insbesondere ein Stahl sein. Die vorliegende Anmeldung betrifft auch verbundene Teile, die nach diesem Verfahren erhalten wurden.
Das zu lötende Teil kann aus verschiedenen Materialien bestehen, die bereits oben beschrieben sind, wie z.B. Hartmetalle und Cermets, insbesondere Hartmetalle H10, K5, K10, P25.
Das Grundmaterial kann aus verschiedenen Materialien bestehen die bereits oben beschrieben sind, wie z.B. Stahl, rostfreier Stahl, Werkzeugstahl, insbesondere Stahllegierungen wie 1.6582, 1.2003, 1.2235, 1.8159. Sowohl das Teil wie auch das Grundmaterial können verschiedene Zusammensetzungen, Formen und Abmessungen haben und können hinsichtlich dieser Parameter jeweils gleich oder unterschiedlich sein.
Es ist auch möglich, eine Mehrzahl von Teilen mit dem Grundmaterial zu verbinden, so dass mehrere Teile, wie z.B. mehrere Hartmetallteile, mit einem Grundmaterial, wie z.B. einem Sägeblatt, verbunden sein können oder umgekehrt.

Diese werden in gegenseitigem Kontakt auf solche Weise angeordnet, dass sie durch Löten miteinander verbunden werden können. Ein Lotmaterial gemäß der Erfindung, optional in Kombination mit einem Flussmittel, wird dann auf dem Teil, dem Grundmaterial oder beiden angeordnet. Dies kann auch vor dem Anordnen von Teil und Grundmaterial aufeinander geschehen, z.B. durch Beschichten mit einer Lotpaste enthaltend eine Lotlegierung gemäß der Erfindung, und anschließendem Anordnen oder durch eine kontinuierliche Zuführung während der Wärmebehandlung, oder die Lotlegierung kann als Formteil wie z.B. als Lotring aufgebracht werden. Das Flussmittel kann vor oder gleichzeitig mit der Lotlegierung aufgebracht werden. Eine Lotstange mit einer Beschichtung oder einem Kern aus einem Flussmittel ist eine Möglichkeit um das Flussmittel gleichzeitig mit dem Lot aufzubringen, aber das Teil, das Grundmaterial oder beide können auch selbst mit einem Flussmittel versehen werden, z.B. durch Aufbringen einer flussmittelhaltigen Flüssigkeit.

Die Wärmebehandlung kann durch Flammenlöten, durch Induktionslöten, aber auch in einem Ofen (Ofenlöten) oder auf andere Weise erfolgen. Inertgas wie Argon, Stickstoff oder Wasserstoff oder deren Gemische bzw. silandotierte Atmosphären können ebenso verwendet werden wie Hartlöten an der Luft oder im Vakuum. Die Temperatur der Wärmebehandlung muß ausreichend sein, um das Lot zu schmelzen und dessen Fließen und Benetzen zu gestatten. Die Temperatur muß jedoch unterhalb der Schmelztemperaturen des Grundmaterials oder des Teils liegen. Nach der Wärmebehandlung wird dem verbundenen Teil die Abkühlung gestattet.

Hierbei ist insbesondere auf Einhaltung der Löttemperatur zu achten, da beim Löten auf Stahl die Umwandlungstemperatur des Stahls nicht erreicht werden darf, da hierdurch dessen Eigenschaften zerstört werden. Hierzu sind Löttemperaturen im Bereich von 710°C bis 730 °C gut geeignet.

Daraus ergibt sich ein Lötverfahren mit den Schritten
- Bereitstellen eines Grundmaterials;
- Bereitstellen eines Teils, welches mit dem Grundmaterial zu verbinden ist;
- Anordnen von Grundmaterial und Teil in Kontakt zueinander in einer zum Löten geeigneten Weise;
- Anordnen einer Lotlegierung gemäß der Erfindung oder dessen Kombination mit einem Flussmittel in Kontakt mit dem Grundmaterial, dem Teil oder beiden in einer Weise, die zum Löten geeignet ist;
- Wärmebehandlung der so erhaltenen Anordnung auf eine Temperatur von 710°C bis 730 °C um die Hartlötung zu bewirken und so ein verbundenes Teil zu erhalten;
- Abkühlen des verbundenen Teils.
Beim Löten mit den beschriebenen Legierungen bei den angegebenen Temperaturen entstehen runde, oft sphärische Kupferpartikel, die sich im Verlauf des Schmelzprozesses bilden. Diese Kupferpartikel weisen eine höhere Duktilität als das umgebende Material auf, da sie eine geringere Konzentration an Legierungselementen beinhaltet und hat daher als disperse Weichphase einen positiven Effekt auf die mechanischen Eigenschaften, es findet gleichsam die Bildung eines Mehrphasenwerkstoffes statt, da diese Kupferkugeln eine Spannungsabsorption mittels plastischer Verformung bewirken. Der Begriff sphärische Kupferpartikel bezeichnet auch andere, ähnliche Formen der Kupferpartikel, die auch tropfenförmig, eiförmig oder aus mehreren Sphären, Tropfen oder Eiern zusammengesetzt sein. Die im Gefüge der Lotnaht des gelöteten Gegenstandes enthaltenen, dreidimensionalen, wie beschrieben rundlichen Kupferpartikel erscheinen in einem metallographischen Schliff zweidimensional als nahezu kreisförmig kupferreiche Phasen.

Um diesen Effekt zu erzielen, muss im Zwei-Phasen-Gebiet gelötet werden, also bei Temperaturen unterhalb der Liquidustemperatur. Bei den beanspruchten Legierungen überlappt dieser Temperaturbereich mit dem der angestrebten Löttemperatur von 710°C bis etwa 730°C.

In Figur 2 ist eine rasterelektronenmikroskopische Aufnahme mit Hilfe von Rückstreuelektronen eines metallurgischen Schliffs abgebildet und zeigt das Gefüge einer Legierung bestehend aus 39 Gew.-% Kupfer, 28 Gew.-% Silber, 20 Gew.-% Zink, 10 Gew.-% Mangan, 2 Gew.-% Indium und 1 Gew.-% Nickel abgebildet. 1 zeigt das Hartmetall, 4 den Stahl, 3 ist die kontinuierliche Phase und 2 ist die disperse Phase, also die runden, oft sphärischen Kupferpartikel.

Ist die Löttemperatur oberhalb der Liquidustemperatur und damit auch oberhalb der angestrebten Löttemperatur, so bildet sich dieses Gefüge nicht aus, was zur Folge hat, dass sich die mechanischen Eigenschaften der Lotnaht (d.H. die Scherfestigkeit) verändern, was im Allgemeinen eine Verschlechterung der mechanischen Eigenschaften mit sich bringt. In diesem Fall, also bei einer zu hohen Löttemperatur oberhalb der Liquidustemperatur, bilden sich beim Abkühlen unter den gängigen Abkühlraten einer Lötanwendung im Gefüge Dendrite aus, so dass eine Lötung bei zu hoher Temperatur durch einen metallurgischen Schliff - gegebenenfalls auch an verschiedenen Stellen einer Lotnaht - klar identifiziert werden kann.

Diese Information kann zur Analyse von Fehlern, Defekten und Qualitätskontrolle, aber auch zur thermometerlosen Einstellung der Wärmequelle bzw. der Lötvorrichtung genutzt werden, umso mehr, als eine lokale Überhitzung der miteinander zu verlötenden Gegenstände zwar auftreten, aber durch eine Überprüfung mit einem Thermometer bzw. Thermoelement nicht sicher detektiert werden kann. Somit kann die Überhitzung und damit Festigkeitsveränderungen im Stahl vom Anwender durch Gefügeuntersuchungen vermieden werden.

Nachfolgend beschreiben wird ein Verfahren zur Kontrolle des Gefüges von Lötverbindungen mit den Schritten
- Bereitstellen eines Grundmaterials;
- Bereitstellen eines Teils, welches mit dem Grundmaterial zu verbinden ist;
- Anordnen von Grundmaterial und Teil in Kontakt zueinander in einer zum Löten geeigneten Weise;
- Anordnen einer Lotlegierung gemäß der Erfindung oder dessen Kombination mit einem Flussmittel in Kontakt mit dem Grundmaterial, dem Teil oder beiden in einer Weise, die zum Löten geeignet ist;
- Wärmebehandlung der so erhaltenen Anordnung bei einer ausreichenden Temperatur um die Hartlötung zu bewirken und so ein verbundenes Teil zu erhalten;
- Abkühlen des verbundenen Teils;
- Anfertigung mindestens eines metallurgischen Schliffes an mindestens einer Position der Lotnaht;
- Prüfung des Gefüges durch Untersuchung des metallurgischen Schliffs;
- Gegebenenfalls Anpassung der Lötbedingungen, um das Auftreten des gewünschten Gefüges zu bewirken.
Die Prüfung des Gefüges kann beispielsweise durch Lichtmikroskopie, Rasterelektronenmikroskopie oder Elektronenstrahlmikrosonden (kurz: Mikrosonden) erfolgen. Hierzu ist ein metallurgischer Schliff des Gefüges erforderlich, der mechanisch, durch Ionenschnitt und mittels Elektro- oder Ionenpolitur, als Längs- oder Querschliff erhalten werden kann.

### Beispiele

Die Legierungen wurden erhalten durch Schmelzen der entsprechenden Mengen der Legierungsbestandteile in einem Tiegel in einem Induktions-ofen und Gießen in eine Graphitform. Diese Proben wurden für die Untersuchung der Legierungen benutzt. Die Zusammensetzungen in der Tabelle enthalten Angaben in Gewichtsprozent (Gew.-%).
Die Kaltumformbarkeit (Tabelle: K) wurde beurteilt durch wiederholtes Kaltwalzen. Es wurden mehrere Kaltwalzvorgänge mit einer Dickenreduktion von je 1 mm durchgeführt ohne Zwischenglühen, bis ein Reißen der Probe auftrat. Das Ergebnis ist in der Tabelle aufgeführt.
Die Beurteilungen haben die folgenden Bedeutungen:
+ gut umformbar, o eingeschränkt umformbar, - schlecht umformbar.

Die Scherfestigkeit (Tabelle: t) einer Lötverbindung wurde bei Raumtemperatur nach Lötung eines Probenkörpers bei 720°C bestimmt, indem eine manuelle Vorrichtung zur Bestimmung der Scherfestigkeit (Gerling Automation, Lotfestigkeitsprüfgerät GLFP 800) mit einer Maximalbelastung von 40 kN verwendet wurde. Als Probenkörper wurde ein quaderförmiges Grundmaterial aus einem Stahl 1.2210 (115CrV3) (DIN EN 10027-2) mit den Abmessungen 30x8x8 mm verwendet und als Hartmetall ein unbeschichtetes Hartmetall des Typs K10 (DIN ISO 513) mit den Abmessungen 8x8x4 mm eingesetzt, welches mit dem zu testenden Lot auf dem Grundmaterial bei 720°C verlötet wurde.
Der Probenkörper wurde horizontal in einer passenden Halterung über einer Abscherkante mit einem Abstand von 0,4 mm zwischen Stahloberfläche und Lötnaht fixiert. Auf diese Weise wird eine gleichmäßige und planare Krafteinwirkung sichergestellt.
Der Stempel des Prüfgeräts liegt auf dem Hartmetall auf, dessen Auflagefläche besitzt die Abmessungen 8x4 mm.
Die finale Anordnung erlaubt eine Maximierung des Verhältnisses der Kraft in y-Richtung und gleichzeitig verringertem Biegemoment in x-Richtung. Der gemessene Wert korrespondiert mit der maximalen Scherkraft und kann zur Berechnung der maximalen Scherfestigkeit herangezogen werden.
Durch Dividieren des Messwertes (N) durch 64 mm² wird die Scherfestigkeit in MPa oder N/mm² erhalten.
Die Beurteilungen haben die folgenden Bedeutungen:
+ >= 250 MPa,; 0 150 bis < 250 MPa,; - < 150 MPa.

| | Beispiele | Cu | Ag | Zn | Mn | In | Sn | Ni | Co | t | K |
|---|---|---|---|---|---|---|---|---|---|---|---|
| | 1 | 39,00 | 28 | 20 | 10 | 2,00 | | 1,00 | | + | + |
| | 2 | 39,00 | 28 | 18 | 12 | 2,00 | | 1,00 | | + | + |
| | 3 | 37,00 | 30 | 20 | 10 | 2,00 | | 1,00 | | + | + |
| | 4 | 39,00 | 26 | 22 | 10 | 2,00 | | 1,00 | | + | + |
| | 5 | 39,00 | 30 | 20 | 8 | 2,00 | | 1,00 | | + | + |
| | 6 | 38,75 | 28 | 20 | 10 | 2,25 | | 1,00 | | + | + |
| | 7 | 39,25 | 28 | 20 | 10 | 1,75 | | 1,00 | | + | + |
| | 8 | 38,00 | 28 | 20 | 10 | 2,00 | | 2,00 | | + | + |
| | 9 | 35,00 | 30 | 20 | 10 | 2,00 | | 3,00 | | + | + |
| | 10 | 39,25 | 28 | 20 | 10 | 2,00 | | 0,75 | | + | + |
| In | 11 | 38,50 | 28 | 20 | 10 | 2,00 | 0,50 | 1,00 | | + | + |
| | | | | | | | | | | | |
| | Vergleichsbeispiele | | | | | | | | | | |
| Ag449 | 30 | 16,00 | 49 | 23 | 8 | | | 4,50 | | + | + |
| | 31 | 35,00 | 28 | 20 | 10 | 6,00 | | 1,00 | | ○ | - |
| | 32 | 41,00 | 28 | 20 | 10 | | | 1,00 | | ○ | + |
| | 33 | 36,00 | 28 | 20 | 10 | | | 6,00 | | - | + |
| | 34 | 31,00 | 28 | 20 | 10 | 2,00 | | 9,00 | | - | + |
| | 35 | 49,00 | 28 | 10 | 10 | 2,00 | | 1,00 | | - | + |
| | 36 | 29,00 | 28 | 30 | 10 | 2,00 | | 1,00 | | + | - |
| | 37 | 46,00 | 28 | 20 | 3 | 2,00 | | 1,00 | | - | + |
| | 38 | 29,00 | 28 | 20 | 20 | 2,00 | | 1,00 | | ○ | - |
| | 39 | 40,00 | 28 | 20 | 10 | 2,00 | | | | ○ | + |
| In | 40 | 52,00 | 15 | 20 | 10 | 2,00 | | 1,00 | | - | + |

## Patentansprüche

1. Lotlegierung bestehend aus 25 bis 33 Gew.-% Silber, 15 bis 25 Gew.-% Zink, 6 Gew.-% bis 14 Gew.-% Mangan, 0,25 Gew.-% bis 4 Gew.-% Nickel, 0,5 Gew.-% bis 4 Gew.-% Indium , 0 bis 1,5 Gew.-% Zinn und/oder Gallium, 0,1 bis 1Gew.-% Cobalt, 0 bis 0,5 Gew.% Germanium, 20 bis 53,5 Gew.-% Kupfer und als unvermeidbare Verunreinigungen Aluminium in Mengen von bis zu 0,001 Gew.-%, Phosphor, Magnesium oder Calcium ebenso wie andere Alkali- und Erdalkalimetalle in Mengen von bis zu jeweils 0,008 Gew.-%, Cadmium, Selen, Tellur, Antimon, Wismut und Arsen in Mengen von bis zu 0,01 Gew.-%, Blei von bis zu 0,025 Gew.-%, Schwefel von bis zu 0,03 Gew.-%, Silizium von bis zu 0,05 Gew.%, Eisen in Mengen von bis zu 0,15 Gew.-%, wobei der Gehalt der unvermeidbaren Verunreinigungen zusammen nicht höher als 0,5 Gew.-% ist und wobei sich die Mengen aller Bestandteile der Legierung zu insgesamt 100 Gew.-% ergänzen.

2. Lotlegierung nach Anspruch 1, enthaltend 26 bis 30 Gew.-% Silber, 17 bis 23 Gew.-% Zink, 8 Gew.-% bis 12 Gew.-% Mangan, 0,25 Gew.-% bis 2 Gew.-% Nickel, 1 Gew.-% bis 3 Gew.-% Indium.

3. Lotlegierung nach Anspruch 1 oder 2, enthaltend 27 bis 29 Gew.-% Silber, 18 bis 22 Gew.-% Zink, 9 Gew.-% bis 11 Gew.-% Mangan, 0,5 Gew.-% bis 1,5 Gew.-% Nickel, 1,5 Gew.-% bis 2,5 Gew.-% Indium.

4. Lotlegierung nach einem oder mehreren der Ansprüche 1 bis 3, enthaltend 0,1 bis 1,5 Gew.-% Zinn und/oder Gallium und/oder 0,1 bis 1 Gew.-% Cobalt und/oder 0,1 bis 0,5 Gew.-% Germanium.

5. Kombination einer Lotlegierung nach einem oder mehreren der vorangehenden Ansprüche mit einem Flussmittel.

## Claims

1. Brazing alloy consisting of 25 to 33% by weight silver, 15 to 25% by weight zinc, 6% by weight to 14% by weight manganese, 0.25% by weight to 4% by weight nickel, 0.5% by weight to 4% by weight indium, 0 to 1.5% by weight tin and/or gallium, 0.1 to 1% by weight cobalt, 0 to 0.5% by weight germanium, 20 to 53.5% by weight copper and - as unavoidable impurities - aluminium in quantities of up to 0.001% by weight, phosphorus, magnesium, or calcium, as well as other alkali and alkaline earth metals, in respective quantities of up to 0.008% by weight, cadmium, selenium, tellurium, antimony, bismuth and arsenic in quantities of up to 0.01% by weight, lead of up to 0.025% by weight, sulfur of up to 0.03% by weight, silicon of up to 0.05% by weight and iron in quantities of up to 0.15% by weight, wherein the total content of unavoidable impurities is no greater than 0.5% by weight and wherein the quantities of all the constituents of the alloy add up altogether to 100% by weight.

2. Brazing alloy according to Claim 1, containing 26 to 30% by weight silver, 17 to 23% by weight zinc, 8% by weight to 12% by weight manganese, 0.25% by weight to 2% by weight nickel and 1% by weight to 3% by weight indium.

3. Brazing alloy according to Claim 1 or 2, containing 27 to 29% by weight silver, 18 to 22% by weight zinc, 9% by weight to 11% by weight manganese, 0.5% by weight to 1.5% by weight nickel and 1.5% by weight to 2.5% by weight indium.

4. Brazing alloy according to one or more of Claims 1 to 3, containing 0.1 to 1.5% by weight tin and/or gallium and/or 0.1 to 1% by weight cobalt and/or 0.1 to 0.5% by weight germanium.

5. Combination of a brazing alloy according to one or more of the preceding claims with a flux.

## Revendications

1. Alliage de brasage constitué de 25 à 33 % en poids d'argent, de 15 à 25 % en poids de zinc, de 6 % en poids à 14 % en poids de manganèse, de 0,25 % en poids à 4 % en poids de nickel, de 0,5 % en poids à 4 % en poids d'indium, de 0 à 1,5 % en poids d'étain et/ou de gallium, de 0,1 à 1 % en poids de cobalt, de 0 à 0,5 % en poids de germanium, de 20 à 53,5 % en poids de cuivre, et, en tant qu'impuretés inévitables, d'aluminium en des quantités allant jusqu'à 0,001 % en poids, de phosphore, de magnésium ou de calcium, ainsi que d'autres métaux alcalins et alcalino-terreux, en des quantités allant chacun jusqu'à 0,008 % en poids, de cadmium, de sélénium, de tellure, d'antimoine, de bismuth et d'arsenic en des quantités allant jusqu'à 0,01 % en poids, de plomb en une quantité allant jusqu'à 0,025 % en poids, de soufre en une quantité allant jusqu'à 0,03 % en poids, de silicium en des quantités allant jusqu'à 0,05 % en poids, de fer en des quantités allant jusqu'à 0,15 % en poids, la teneur en l'ensemble des impuretés inévitables n'étant pas supérieure à 0,5 % en poids, et les quantités de l'ensemble des constituants de l'alliage faisant en tout un total de 100 % en poids.

2. Alliage de brasage selon la revendication 1, contenant 26 à 30 % en poids d'argent, 17 à 23 % en poids de zinc, 8 % en poids à 12 % en poids de manganèse, 0,25 % en poids à 2 % en poids de nickel, 1 % en poids à 3 % en poids d'indium.

3. Alliage de brasage selon la revendication 1 ou la revendication 2, contenant 27 à 29 % en poids d'argent, 18 à 22 % en poids de zinc, 9 % en poids à 11 % en poids de manganèse, 0,5 % en poids à 1,5 % en poids de nickel, 1,5 % en poids à 2,5 % en poids d'indium.

4. Alliage de brasage selon l'une ou plusieurs des revendications 1 à 3, contenant 0,1 à 1,5 % en poids d'étain et/ou de gallium et/ou 0,1 à 1 % en poids de cobalt, et/ou 0,1 à 0,5 % en poids de germanium.

5. Combinaison d'un alliage de brasage selon l'une des revendications précédentes avec un fondant.
